# EUROPÄISCHE PATENTANMELDUNG

(11) **EP 0 774 571 A1**
(43) Veröffentlichungstag der Anmeldung: **21.05.1997**
(21) Anmeldenummer: 95118209.6
(22) Anmeldetag: 20.11.1995
(51) Int. Cl.: F02B 41/04, F02B 47/02

(54) **Zweitaktverbrennungsmotor mit zusätzlicher Wassereinspritzung**

(71) Anmelder: von Görtz & Finger Techn. Entwicklungs Ges.m.b.H., D-36110 Schlitz (DE)
(72) Erfinder: Die Erfindernennung liegt noch nicht vor

(57) **Zusammenfassung**

**Verfahren zur Nutzung der Abwärme eines Verbrennungsmotors,**
wobei zumindest ein Teil der in den Abgasen des Arbeitstaktes sowie im Motorblock enthaltenen Wärmeenergie zum Verdampfen einer nach Beendigung der Verbrennung in den Verbrennungsraum und in die Abgase eingespritzten Flüssigkeit und damit zu einer Erhöhung des Gesamtdruckes des Gemisches aus Abgasen und Flüssigkeitsdampf genutzt und in mechanische Arbeit überführt wird.

Das erfindungsgemäße Verfahren, dargestellt als 2 Takt + 2 Stoff-Motor in Fig.3 verdoppelt den Hub, damit der nach der Verbrennung durch die eingespritzte Flüssigkeit entstandene Dampf einen längeren Expansionsweg besitzt. Durch Nachlauf der äußeren Pleuelstangen wird eine längere Verweilzeit des Kolbens im O.T und U.T. erreicht. Dadurch wird eine bessere Verbrennung im O.T. und ein längerer Zeitabschnitt für die Querspülung im U.T. erreicht.

## Beschreibung

Die Erfindung richtet sich auf ein Verfahren zur Abwärmenutzung eines Verbrennungsmotors in zusätzliche mechanische Leistung.

Bei Verbrennungsmotoren werden nur ca. 35% der bei der Verbrennung frei werdenden Energie in mechanische Leistung überführt. Der Rest geht als Abwärme über die Oberfläche des Motorblocks,den Kühlkreislauf und die Abgase verloren. Lediglich ein kleiner Teil kann über den Kühlwasserkreislauf und die fahrzeugeigene Heizung genutzt werden. Aufgrund der relativ hohen Kraftstoffkosten und der CO2 - Belastung durch die Abgase, wäre eine Erhöhung des Wirkungsgrades durch höhere Nutzung der Abwärme wünschenswert. Es ist jedoch bislang nicht gelungen, in dieser Richtung einen nennenswerten Fortschritt zu erzielen.

Es ist die Aufgabe der vorliegenden Erfindung, ein Verfahren zu schaffen, bei dem zumindest ein Teil der über die Abgase und den Motorblock verlorengehenden Energie in zusätzliche mechanische Arbeit umgewandelt wird. Zu diesem Zweck ist der erfindungsgemäße Gedanke eines Verfahrens zur Nutzung der Abwärme eines Verbrennungsmotors, daß zumindest ein Teil der in den Abgasen des Arbeitstaktes sowie im Motorblock enthaltenen Energie genutzt wird.

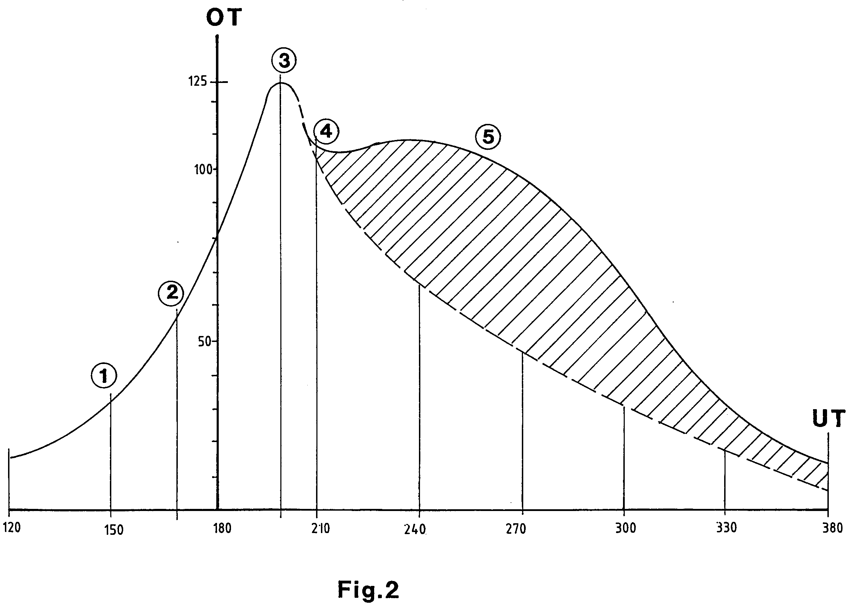

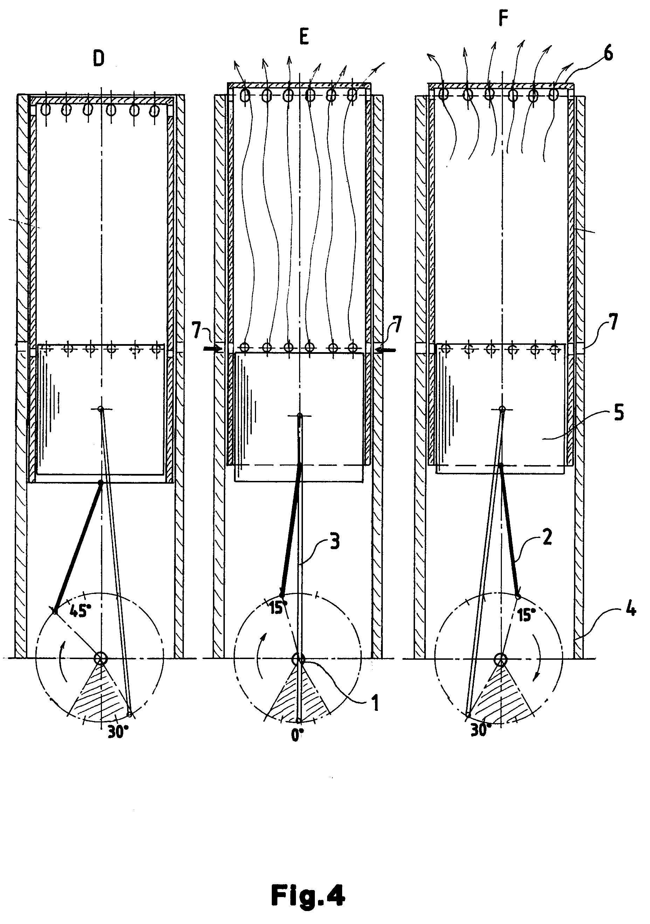

Die Verdampfung einer nach der Verbrennung in den Verbrennungsraum und in das Abgas des Arbeitstaktes eingespritzten Flüssigkeit, führt zu einer Erhöhung des Gesamtdrucks des Gemisches aus Abgasen und Flüssigkeitsdampf, der während des restlichen Arbeitstaktes in mechanische Arbeit überführt wird. Aus den Diagramm **Fig.2** ist zu erkennen, daß der Druck und die Temperatur nachdem O.T. am höchsten ist und dann stark abfällt.Zu diesem Zeitpunkt muß die Flüssigkeit eingespritzt werden, damit sich diese durch die vorhandene Wärme in den Brenngas und am Motorblock in Millisenkunden in Dampf umwandelt und so einen zusätzlichen Druck auf den Kolben ausübt.

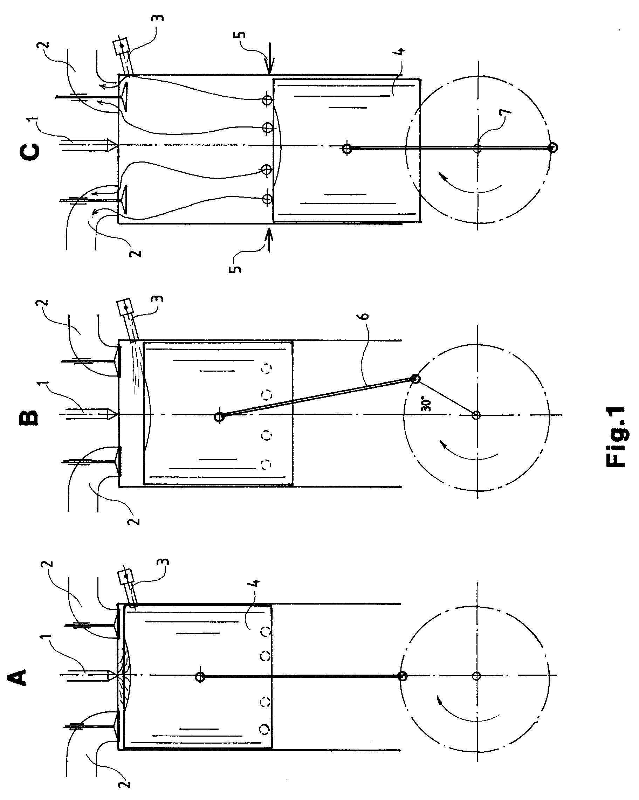

Der Arbeitszyklus besteht bei der Anwendung des erfindungsgemäßen Verfahrens aus **zwei Takten.** Wie aus Fig.1 zu ersehen ist, besteht der Arbeitsablauf aus den folgenden Arbeitsgängen:
a) Verdichten der eingeblasenen Luft
b) Brennstoffeinspritzung
c) Verbrennung - Explosion
d) Flüssigkeitseinspritzung
e) Dampfbildung - Expansion
f) Arbeitstakt bis U.T.
g) Querspülung der Abgase

Nach Beendigung der Verbrennung wird eine Flüssigkeit eingespritzt. An den heißen Oberflächen des Verbrennungsraumes und durch die Aufnahme der Wärmeenergie der Abgase verdampft die Flüssigkeit schlagartig. Der Phasenübergang führt zu einer Erhöhung des Gesamtdrucks des Gemisches aus Abgasen und Flüssigkeitsdampf.
Da sich der Kolben nun in Expansionsrichtung bewegt, kann dieser erhöhte Druck sofort zusätzliche mechanische Arbeit an der Kurbelwelle leisten. Die dabei aufgebrachte Energie wird sowohl dem Abgas als auch den Oberflächen des heissen Verbrennungsraumes entzogen. Der Motor wird optimal gekühlt, da die Wärme direkt am Entstehungsort abgeführt wird.

Es liegt im Rahmen der Erfindung, daß das Gemisch aus Abgasen und Flüssigkeitsdampf kurz vor Beendigung des Arbeitstaktes mit Überdruck aus dem Druckbehälter, durch die unteren Öffnungen aus den geöffneten Auslaßventilen ausgestoßen werden. Die ausgestoßenen vermischten Abgase weisen jedoch eine niedrigere Temperatur auf. Auch kann durch eine geeignete Vorrichtung, welche die ausgestoßenen Gase durchlaufen, ein Teil der eingespritzten Flüssigkeit durch Kondensation zurückgewonnen werden. Dadurch wird ein zu hoher Flüssigkeitsverbrauch vermieden. Ebenfalls kann die Kondensationswärme für die Vorwärmung der einzuspritzenden Flüssigkeit verwendet werden. Es besteht auch die Möglichkeit, der Flüssigkeit ein geeignetes Additiv beizumischen, um bessere Abgaswerte zu erhalten.

Die Flüssigkeit sollte mit hohen Druck über eine seperate Einspritzpumpe und eine möglichst kurze Verbindungsleitung zu einer Mehrlochdüse geführt werden. Damit wird erreicht, daß die Flüssigkeit in feinzerstäubten Aerosolen direkt in den Brennraum eingespritzt werden kann. In dem Kolben befindet sich eine muldenförmige Vertiefung, die mit einem feinen Kupferdrahtgestrick gefüllt sein könnte. Da Kupfer eine sehr hohe Wärmeleitfähigkeit besitzt, wird damit ein schnellerer Wärmeübergang von der gespeicherten Wärme aus dem Arbeitstakt erreicht und es erfolgt eine Verdampfung in wenigen Millisekunden.
Ebenfalls wird bei der Direkteinspritzung durch die Verdampfung der Flüssigkeit die Restwärme aus dem Arbeitstakt, die im Zylinderkopf, Kolben und Motorblock vorhanden ist, sofort übernommen.

Es ist vorteilhaft, daß eine Flüssigkeit mit hoher Wärmeleitfähigkeit eingespritzt wird. Durch diese Maßnahme wird erreicht, daß sowohl die Flüssigkeit als auch deren Dampf in einem kurzen Zeitraum viel Wärme aufnehmen können. Die eingespritzte Flüssigkeit erhitzt sich in einem kurzen Zeitraum auf ihre Siedetemperatur. Auch kann der Flüssigkeitsdampf während seines Verbleibens im Zylinderraum ständig einen hohen Betrag der im Motorblock gespeicherten Wärmemenge aufnehmen.

Es hat sich als günstig erwiesen, daß eine Flüssigkeit mit niedriger Siedetemperatur eingespritzt wird. Bei Verwendung einer derartigen Flüssigkeit ist der Zeitraum, in dem sich die eingespritzte Flüssigkeit auf ihre Siedetemperatur erhitzt, so gering als möglich. Der Verdampfungsvorgang kann somit sofort nach dem Einspritzen einsetzen. Nötigenfalls kann die Flüssigkeit vor dem Einspritzen bis knapp unter den erhöhten Siedepunkt während des Einspritzens erhitzt werden.

Es liegt im Rahmen der Erfindung, daß bei einem Hubkolbenmotor zur Durchführung des erfindungsmäßigen Verfahrens an der Zylinderwand zusätzlich eine Einspritzdüse zum fein zerstäubenden Einspritzen der Flüssigkeit angeordnet ist. Hierfür können handelsübliche Einspritzdüsen für Kraftstoff verwendet werden. Jedoch ist bei der Wahl der Düsen besonders darauf zu achten, daß die Flüssigkeit während des Einspritzens so fein als möglich zerstäubt wird. Je feiner die Flüssigkeit zerstäubt wird, um so größer ist die Oberfläche eines Flüssigkeitströpfchens im Verhältnis zu seinem Volumen. Diese Tatsache ist für einen schnellen Verdampfungsvorgang wichtig. Außerdem ist es günstig, wenn ein möglichst großer Teil der fein zerstäubten Flüssigkeit direkt auf die heißen Oberflächen des Brennraumes gelangt und seine Verdampfungswärme diesen Oberflächen entzieht, da diese eine bedeutend höhere Wärmeleitfähigkeit als die Abgase aufweisen.

Weitere Merkmale, Einzelheiten und Vorteile der Erfindung ergeben sich aus der folgenden Beschreibung eines Verfahrens und bevorzugter Ausführungsformen der Erfindung sowie anhand der Zeichnungen. Hierbei zeigt:
**Fig.1** Abbildung A das Einspritzen des Brennstoffes in die Kolbenmulde. In Abbildung B wird bei etwa 30° Kubelwinkel nach O.T.seitlich Flüssigkeit eingespritzt. Dadurch erhöht sich der Druck im Brennraum, da die durch die Verbrennung entstandene Wärmeenergie in Dampf umgewandelt wird. Abbildung C zeigt den Kolben beim U.T. Hier gibt der Kolben die Löcher für die Spülung frei und es wird Luft mit einem bestimmten Druck eingeblasen. Da gleichzeitig beide Ventile öffnen, erfolgt eine Querspülung der Abgase.
**In Fig.2** ist die Druckkurve über dem Kurbelwinkel dargestellt. Dabei bedeutet: 1) Verdichtung; 2) Brennstoffeinspritzung; 3) Verbrennungs- und Druckhöchstpunkt; 4) Flüssigkeitseinspritzung; 5) Zusätzliche Leistung durch Dampfbildung.

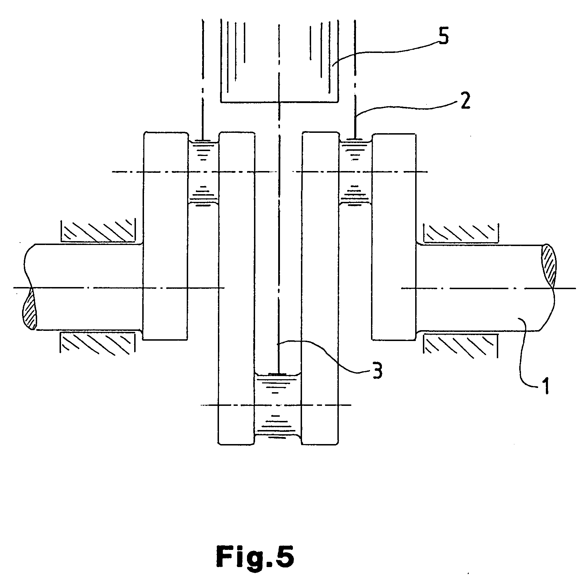

**Fig.4** zeigt den Gegenkolbenmotor mit der Abbildung D zu Beginn des Spülvorganges. Im Bild E wird durch die vom Kolben freigegebenen seitlichen Bohrungen 7 Luft für den Spülvorgang eingeblasen. Da gleichzeitig der Gegenkolben 6 mit seinen Öffnungen über den Zylinder 4 herausragt, erfolgt eine optimale Spülung. In Abbildung F hat der Kolben die Bohrungen 7 wieder verschlossen. Da der Gegenkolben 6 um 15° nachläuft, bleiben die Abgasöffnungen noch kurz geöffnet, so daß noch Restgase herausgedrückt werden.

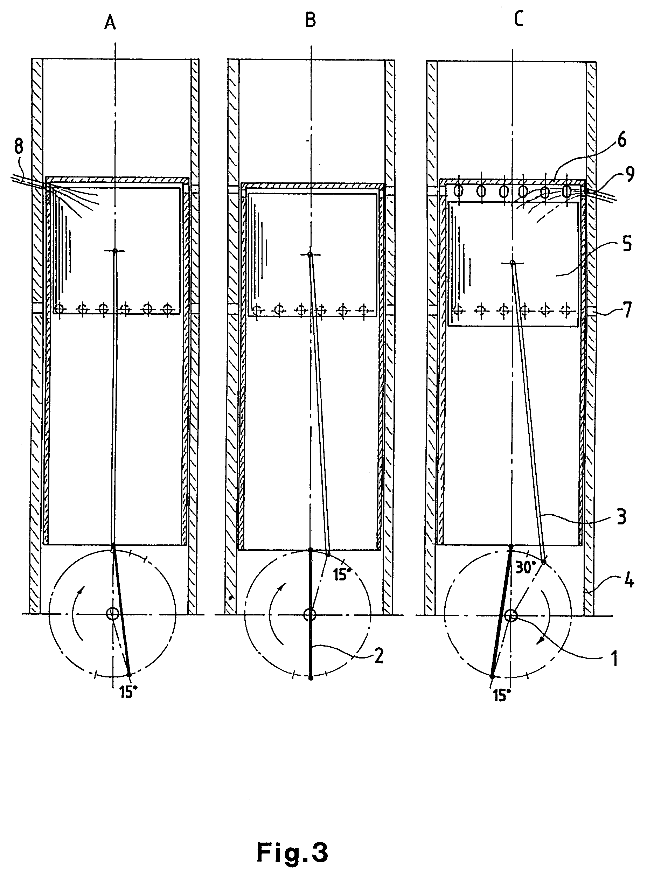

**Fig.3** zeigt im Bild A den Zeitpunkt der Brennstoffeinspritzung 8. In Abbildung B erfolgt die Verbrennung bei höchster Kompression, so daß bereits bei einem Kurbelwinkel von 30° nach O.T. der Verbrennungsvorgang abgeschlossen ist. Wie in Bild C dargestellt, wird die Flüssigkeit zu diesem Zeitpunkt in die heißen Gase und in den heißen Brennraum eingespritzt. Dabei entsteht kurzfristig Dampf, der zur Druckerhöhung beiträgt.
**Fig.5** zeigt die doppeltgekröpfte Kurbelwelle 1 mit dem Kolben 5 und dem dazugehörigen Pleuel 3. Seitlich sind an beiden Seiten die Pleuelstangen 2 für den Gegenkolben zu erkennen.

## Patentansprüche

1. Verfahren zur Nutzung der Abwärme eines Verbrennungsmotors, dadurch gekennzeichnet, daß zumindest ein Teil der in den Abgasen, sowie im Motorblock enthaltenen Wärmeenergie durch Verdampfen einer nach Beendigung der Verbrennung in den Verbrennungsraum und in die Abgase eingespritzten Flüssigkeit.
Damit wird die Erhöhung des Gesamtdrucks des Gemisches aus Abgasen und Flüssigkeitsdampf genutzt und während des restlichen Arbeitstaktes in mechanische Arbeit übergeführt wird.

2. Verfahren nach Anspruch 2, dadurch gekennzeichnet, daß das Gemisch aus Abgasen und Flüssigkeitsdampf am Ende des Arbeitstaktes durch Einblasen von Luft ausgestoßen wird.

3. Verfahren nach mindestens einem der Ansprüche 1 bis 2, dadurch gekennzeichnet, daß die Flüssigkeit mit hohen Druck feinst zerstäubt und in solcher Menge eingespritzt wird, daß sie durch die Wärmeenergie der Abgase und der Oberflächen des Verbrennungsraumes schlagartig verdampft wird.

4. Verfahren nach mindestes einem der Ansprüche 1 bis 3 dadurch gekennzeichnet, daß eine Flüssigkeit mit hoher Wärmeleitfähigkeit und niedriger Siedetemperatur eingespritzt wird.

5. Verfahren nach mindestens einem der Ansprüche 1 bis 4 dadurch gekennzeichnet, daß der eingespritzten Flüssigkeit ein Zusatz in Form von Additiven beigemischt wird das die Abgaswerte verbessert.

6. Hubkolbenmotor zur Durchführung des Verfahrens nach mindestens einem der Ansprüche 1 bis 5, dadurch gekennzeichnet, daß mit einer zusätzlichen Düse zum fein zerstäubenden Einspritzen der Flüssigkeit angeordnet ist.

7. Verfahren nach mindestens einem der Ansprüche 1 bis 6 dadurch gekennzeichnet, daß die Flüssigkeit feinst zerstäubt auf ein Kupfergestrick, das sich in einer Mulde des Kolbens befindet, eingespritzt wird.

8. Verfahren nach mindestens einem der Ansprüche 1 bis 7 dadurch gekennzeichnet, daß durch das Einspritzen einer Flüssigkeit dem Brennraum und den Gasen Wärme entzogen wird und dadurch ein schneller und effek - tiver Kühlvorgang erfolgt.

9. Verfahren nach mindestens einem der Ansprüche 1 bis 8 dadurch gekennzeichnet, daß durch Kondensation der Abgase ein Teil der eingespritzten Flüssingkeit zurückgewonnen wird und die Restwärme für die Vorwärmung der Einspritz-Flüssigkeit verwendet wird.

10. Verfahren nach mindestens einem der Ansprüche 1 bis 9 dadurch gekennzeichnet, daß der Kolben in einer geschlossenen Laufbüchse arbeitet, die gleichzeitig als Gegenkolben arbeitet.

11. Verfahren nach mindestens einem der Ansprüchel bis 10 dadurch gekennzeichnet, daß die Außenpleuel des Gegenkolbens mit 15° Kurbelwinkel dem Mittelpleuel nachlaufen, um eine längere Verweilzeit im O.T. und U.T. zu erreichen.

12. Verfahren nach mindestens einem der Ansprüchel bis 11 dadurch gekennzeichnet, daß im U.T. des Kolbens durch das Einblasen von Luft eine Querspülung erfolgt.
